# EUROPÄISCHE PATENTSCHRIFT

(11) **EP 0 941 646 B1**
(45) Veröffentlichungstag und Bekanntmachung des Hinweises auf die Patenterteilung: **25.09.2002**
(21) Anmeldenummer: 99104235.9
(22) Anmeldetag: 03.03.1999
(51) Int. Cl.: A01D 34/14

(54) **Klinge für Mähmesser**
Mower knife blade
Lame pour faucheuse

(30) Priorität: 10.03.1998 DE 19810188
(43) Veröffentlichungstag der Anmeldung: 15.09.1999
(73) Patentinhaber: Frielinghaus GmbH, 58256 Ennepetal (DE)
(72) Erfinder: Braun, Wolfgang, 58256 Ennepetal (DE)
(74) Vertreter: Patentanwälte Rehberg + Hüppe

(56) Entgegenhaltungen:
- EP-A- 0 555 694
- DE-A- 1 946 003
- DE-B- 1 060 174
- DE-C- 4 120 689
- DE-C- 19 525 670
- FR-A- 2 601 221
- US-A- 3 128 644
- PATENT ABSTRACTS OF JAPAN vol. 010, no. 120 (C-343), 6. Mai 1986 & JP 60 245726 A (MIYOSHI SASAOKA;OTHERS: 02), 5. Dezember 1985

## Beschreibung

Die Erfindung betrifft eine Klinge für Mähmesser mit den im Oberbegriff des Patentanspruchs 1 angegebenen Merkmalen. Es wird auch ein Verfahren zu ihrer Herstellung aufgezeigt. Klingen dieser Art, sei es in der Ausbildung als Einfachklinge, Doppelklinge oder Dreifachklinge, werden zu mehreren nebeneinander auf einen Messerrücken aufgesetzt, der in der Regel Bestandteil eines Mähwerkes ist. Das Aufsetzen bzw. Befestigen der Klingen geschieht durch einen Niet- oder Schraubvorgang. Zu diesem Zweck weisen solche Klingen einen Befestigungsbereich auf, in welchem sich die Klinge mit dem Messerrücken überlappt. Ein Schneidenbereich der Klinge steht gegenüber dem Messerrücken über und trägt mindestens eine Schneide, in der Regel jedoch zwei Schneiden.

Eine Klinge der im Oberbegriff des Patentanspruchs 1 angegebenen Art ist aus der DE 195 25 670 C1 bekannt. Die Klinge besitzt einen vorderen Schneidenbereich, der mindestens eine Schneide mit einer sich über die Schneide erstreckenden Härtezone aufweist. Der Schneidenbereich ist durch Energiestrahlen, vorzugsweise Elektronenstrahlen, gehärtet. Die Klinge weist einen rückwärtigen Bereich auf, der zur Befestigung der Klinge an einem Messerrücken dient und zwei Durchbrechungen für den Einsatz eines Befestigungsmittels besitzt. In diesem Befestigungsbereich der Klinge ist eine weitere Härtezone vorgesehen ist, die sich nur über einen Teil des Befestigungsbereiches erstreckt. Die Härtezone im Schneidenbereich und die Härtezone im Befestigungsbereich sind getrennt voneinander angeordnet. Durch die Härtezone im Befestigungsbereich werden Inselbereiche geschaffen, die bei guter Verschleißfestigkeit auch ein ausgeprägtes Federverhalten aufweisen. Diese Inselbereiche werden mit Energiestrahlen derart gehärtet, daß sie andere oder gleiche Werkstoffeigenschaften als der gehärtete Schneidenbereich aufweisen. Die Klinge erhält unabhängig von ihrer Ausbildung im Schneidenbereich eine günstige Biegesteifigkeit im Befestigungsbereich, um während des Einsatzes Biege- und Schlagbeanspruchungen durch Fremdkörper standzuhalten.

Aus der DE 41 20 689 C1 ist auch ein Verfahren zum Elektronenstrahlhärten des Schneidenbereiches von Klingen bekannt, bei dem die Klingen schuppenartig so übereinandergelegt werden, daß immer nur der Schneidenbereich zur Beaufschlagung durch den Elektronenstrahl freiliegt. Der Werkzeuggrundkörper ist vergleichsweise zur Schneide auf geringere Härte eingestellt, was sich vorteilhaft auf die Bruchfestigkeit der Klinge auswirkt.

Eine weitere Klinge für Mähwerke ist aus der DE-AS 19 46 003 bekannt. Diese Klinge weist einen Schneidenbereich auf, der in etwa dreieckigen Umriß besitzt. Bei der Ausbildung als Doppelklinge sind zwei solche Bereiche an einem durchgehenden Materialstück aus Stahl vorgesehen. Der Schneidenbereich erstreckt sich aus der Sicht des Befestigungsbereiches nach vorn, also in Arbeitsrichtung. Der Schneidenbereich weist mindestens eine Schneide mit einer sich über die Schneide erstreckenden Härtezone auf. Die Härtezone erstreckt sich somit nur über einen Teil des Schneidenbereiches. Die Härtezone ist streifenförmig ausgebildet und erstreckt sich vom Rand der Schneide in das Material der Klinge mit einer gewissen Tiefe hinein. Der Befestigungsbereich der Klinge ist rückwärts angeordnet. Er dient der Befestigung der Klinge an einem Messerrücken und weist hierzu mindestens eine Durchbrechung, in der Regel jedoch mehrere Durchbrechungen, für den Einsatz von Nieten oder Schrauben auf. Zwecks Erhöhung der Elastizität und Verschleißfestigkeit kann der die Klinge bildende Materialzuschnitt vor dem partiellen Härten der Schneiden durchgehend vergütet oder gehärtet sein. Dies bedeutet einen erheblichen Arbeitsaufwand. In einem ersten Schritt muß die gesamte Klinge gehärtet werden. Es schließt sich dann das Anlassen der gesamten Klinge an, um die durchgehende Vergütung oder Härtung zu erreichen. In einem dritten Schritt wird der Schneidenbereich partiell gehärtet. In einem letzten Schritt erfolgt dann das Anlassen, welches sich auf den Schneidenbereich partiell auswirkt. Diese vier Schritte führen zu guten Ergebnissen hinsichtlich der Standfestigkeit und der übrigen Gebrauchseigenschaften. Die Herstellung ist jedoch relativ teuer. Die Klinge weist im Befestigungsbereich eine geringere Härte als im Schneidenbereich auf.

Aus der DE 42 04 000 C2 ist eine mindestens eine Schneide aufweisende Klinge für land- oder forstwirtschaftliche Zwecke aus Stahl bekannt, die im Bereich einer angeschliffenen oder nachzuschleifenden Schneidwarte eine eine Schneidenspitze bildende gehärtete Schicht und anschließend eine weiche Schicht aufweist. Auch diese Klinge besitzt einen Schneidenbereich und einen Befestigungsbereich. Der Befestigungsbereich weist zwei Durchbrechungen für die Befestigung auf. Die gehärtete Schicht erstreckt sich über die gesamte Oberfläche der Klinge, also einschließlich des Schneidenbereiches und des Befestigungsbereiches. Die gehärtete Schicht weist eine Härte von etwa 65-70 HRc und die weiche Schicht eine Härte von etwa 35-48 HRc auf. Bei der Herstellung dieser Klinge wird eine Rohklinge gestanzt, diese im Bereich der später zu bildenden Schneide im Oberflächenbereich erwärmt und abgeschreckt. Schließlich wird an der Rohklinge die Schneide durch Anschleifen erzeugt. Die besonderen Herstellungs- bzw. Bearbeitungsschritte der Rohklinge erstrecken sich immer auf die gesamte Klinge, also einschließlich des Schneidenbereichs und des Befestigungsbereichs.

Es sind auch Klingen für Mähmesser bekannt, die nur im Schneidenbereich gehärtet sind. Der übrige Bereich, also insbesondere der Befestigungsbereich der Klinge, ist nicht gehärtet. Solche Klingen haben zwar eine sehr hohe Schnittfestigkeit, aber nur eine geringe Biegesteifigkeit. Solche Klingen sind deshalb beim Auftreten von Hindernissen im Schneidbereich sehr anfällig und verbiegen sich schnell, so daß sie ihre Schneidfunktion nicht mehr erfüllen können. Eine solche verbogene Klinge muß ausgewechselt werden, was insbesondere bei Befestigung der Klinge mit einer Nietung an dem Messerrücken einen erheblichen Zeit- und Arbeitsaufwand bedeutet.

Der Erfindung liegt die Aufgabe zugrunde, eine Klinge der eingangs beschriebenen Art und ein Verfahren zu ihrer Herstellung aufzuzeigen, bei der einerseits die Gefahr des Auftretens von Verbiegungen bis hin zu Brüchen reduziert ist und die andererseits dennoch bei normalem Verschleißverhalten eine gute Standfestigkeit, insbesondere hinsichtlich des Schnittverhaltens, aufweist.

Erfindungsgemäß wird dies bei einer Klinge der im Oberbegriff des Patentanspruchs 1 beschriebenen Art dadurch erreicht, daß die Härtezone im Befestigungsbereich und die Härtezone im Schneidenbereich aneinander anschließend angeordnet sind.

Die Erfindung geht von dem Gedanken aus, die Härtezone, die sich partiell im Schneidenbereich erstreckt, bis in den Befestigungsbereich zu verlängern bzw. zu ergänzen, und zwar derart, daß sich die Härtezone auch nur partiell im Befestigungsbereich erstreckt. Die Härtezone im Schneidenbereich und die Härtezone im Befestigungsbereich bilden jedoch keine unzusammenhängenden Inselbereiche, sondern gehen ineinander über bzw. schließen aneinander an, so daß die Klinge, die vom Befestigungsbereich am Messerrücken ausragt, gleichsam einen verstärkten bzw. gehärteten Kragstab bildet, durch den die Biegesteifigkeit wesentlich verbessert ist. Die Klinge wird damit insgesamt steifer und stabiler, ohne daß eine Bruchgefahr beim Auftreten auf Hindernisse entsteht. Die Klinge weist sowohl im Schneidenbereich wie auch im Befestigungsbereich auch ungehärtete, relativ weiche Zonen auf. Die beiden Härtezonen sind jeweils streifenförmig ausgebildet, d. h. sie besitzen einen wesentlichen Flächenanteil, der sich in Richtung der Klinge erstreckt, und einen dazugehörigen, die Streifenbreite festlegenden Teil quer dazu. Wichtig ist auch, daß die im Befestigungsbereich vorhandene Härtezone die Auflagefläche am Messerrücken teilweise überlappt. Insbesondere werden die beiden Härtezonen in einem gemeinsamen Arbeitsvorgang durch induktives Härten herbeigeführt. Der nachfolgende Anlaßvorgang erstreckt sich über die gesamte Klinge, so daß im wesentlichen lediglich zwei Herstellungsarbeitsgänge anfallen. Damit ist es vorteilhaft möglich, in den beiden Härtezonen eine Härte von 50-60 HRc, insbesondere 55 HRc, zu erzeugen, während das Material der Klinge außerhalb der Härtezonen eine Härte von 15-25 HRc aufweist.

Die Härtezone kann im Befestigungsbereich mit Abstand zu der oder den Durchbrechungen angeordnet sein. Die im Befestigungsbereich vorgesehene Härtezone sollte so dimensioniert und angeordnet werden, daß der Befestigungsbereich nahe den Durchbrechungen möglichst gemieden wird. Dies ist besonders bedeutsam, wenn Klingen dieser Art durch einen Nietvorgang mit dem Messerrücken verbunden werden. Die Schlagbeanspruchung der Klinge, die dabei unvermeidbar eintritt, wird so im relativ weichen Materialbereich aufgenommen und führt nicht dazu, daß die Klinge im Bereich der Härtezonen an- oder einreißt.

Beide Härtezonen sollten streifenförmig und ineinander übergehend ausgebildet sein. Es ist wichtig, daß die Härtezone eine gewisse Breite aufweist, also quer zur Haupterstreckungsrichtung der Klinge. Diese Breite sollte mindestens 10 mm, besser mehr betragen. Auf diese Weise wird ein stabiler Balken innerhalb der Klinge erzeugt, der für die Biegesteifigkeit verantwortlich ist.

Die Klinge weist im Schneidenbereich dreieckige Gestalt und im Befestigungsbereich rechteckige Gestalt auf. Die Härtezonen sind symmetrisch zu einer Längsmittelebene der Klinge verteilt angeordnet. Dies bezieht sich auf eine Einzelklinge, gilt aber natürlich entsprechend auch bei Doppel- und Mehrfachklingen für die einzelnen Bereiche.

Beide Härtezonen weisen zweckmäßig übereinstimmende Härte auf. Die übereinstimmende Härte ergibt sich durch den Behandlungsschritt, in welchem gleichzeitig die Härtezonen im Schneidenbereich und im Befestigungsbereich gehärtet werden. Es ist aber auch möglich, daß die weitere Härtezone im Befestigungsbereich eine gegenüber der Härtezone im Schneidenbereich durch einen Anlaßvorgang reduzierte Härte aufweist. In diesem Falle ist ein dritter Behandlungsschritt erforderlich, nämlich ein Anlassen, welches sich jedoch nur auf den Befestigungsbereich bezieht. Damit ist es möglich, die Härte im Befestigungsbereich gezielt gegenüber der Härte im Schneidenbereich zu reduzieren.

Die Härtezone kann im Befestigungsbereich in Richtung der Längsmittelebene der Klinge ausgerichtet angeordnet sein. Auch dieser besonderen Anordnung und Ausrichtung der durchgehenden Härtezone liegt die Vorstellung zugrunde, die Härtezone senkrecht zu der Haupterstreckungsrichtung des Messerrückens einzuspannen. In der Regel besitzt der Befestigungsbereich nur eine Härtezone. Es ist aber auch möglich, daß die Härtezone im Befestigungsbereich in zwei nicht miteinander verbundene Teilbereiche unterteilt ist, von denen jeder Teilbereich mit einer Härtezone im Schneidenbereich in Verbindung steht. Eine andere Möglichkeit besteht darin, daß die Härtezone im Befestigungsbereich in Richtung quer zu der Längsmittelebene der Klinge ausgerichtet angeordnet ist und gemeinsam mit der Härtezone im Schneidenbereich einen geschlossenen Dreieckszug bildet. Auch bei dieser Ausführungsform wird die Klinge insgesamt durch den geschlossenen Dreieckszug versteift und so die Biegesteifigkeit erhöht.

Ein Verfahren zur Herstellung einer solchen Klinge für Mähmesser geht davon aus, daß eine Rohklinge gestanzt, diese im Schneidenbereich erwärmt und abgeschreckt und an der Rohklinge die Schneide durch Anschleifen erzeugt wird. Erfindungsgemäß wird die Rohklinge sowohl im Schneidenbereich als auch im Befestigungsbereich in einem Arbeitsgang streifenförmig durchgehend induktiv erwärmt und dann die gesamte Rohklinge vor dem Anschleifen der Schneide angelassen. Damit sind für die eigentliche Wärmebehandlung nur zwei Arbeitsschritte erforderlich, so daß sich eine solche Klinge preiswert herstellen läßt. Das Befestigen der Klinge am Messerrücken führt damit nicht zu einer Beeinträchtigung. Andererseits besitzt die Klinge ein normales Verschleißverhalten und eine entsprechende Standfestigkeit der Schneide. Beim Auftreten auf Hindernisse ist die Gefahr des Verbiegens reduziert.

Es ist aber auch möglich, daß die Härtezonen der Rohklinge im Scheidenbereich und im Befestigungsbereich in einem ersten Anlaßvorgang auf eine Härte von etwa 50 bis 60 HRc eingestellt wird, und daß die Härtezone im Befestigungsbereich der Rohklinge in einem zweiten Anlaßvorgang auf eine Härte von etwa 30 bis 40 HRc eingestellt wird. Hierbei wird zwar ein dritter Behandlungsschritt erforderlich. Es ergibt sich jedoch vorteilhaft die Möglichkeit, die Härte im Schneidenbereich anders zu wählen als im Befestigungsbereich. So kann die Härte im Schneidenbereich insbesondere etwa zwischen 50 und 60 HRc betragen, während sie im Befestigungsbereich vielleicht 30-40 HRc aufweist.

Die Erfindung wird anhand bevorzugter Ausführungsbeispiele weiter erläutert und beschrieben. Es zeigen:
- Fig. 1: eine Draufsicht auf eine Klinge in einer ersten Ausführungsform, aufgesetzt auf einen Messerrücken,
- Fig. 2: eine Draufsicht auf eine Klinge in einer zweiten Ausführungsform, nach dem Härten,
- Fig. 3: eine dritte Ausführungsform der Klinge,
- Fig. 4: eine weitere Ausführungsform der Klinge,
- Fig. 5: eine weitere Ausführungsform der Klinge,
- Fig. 6: eine Klinge in der Ausbildung als Doppelklinge und
- Fig. 7: eine weitere Doppelklinge.

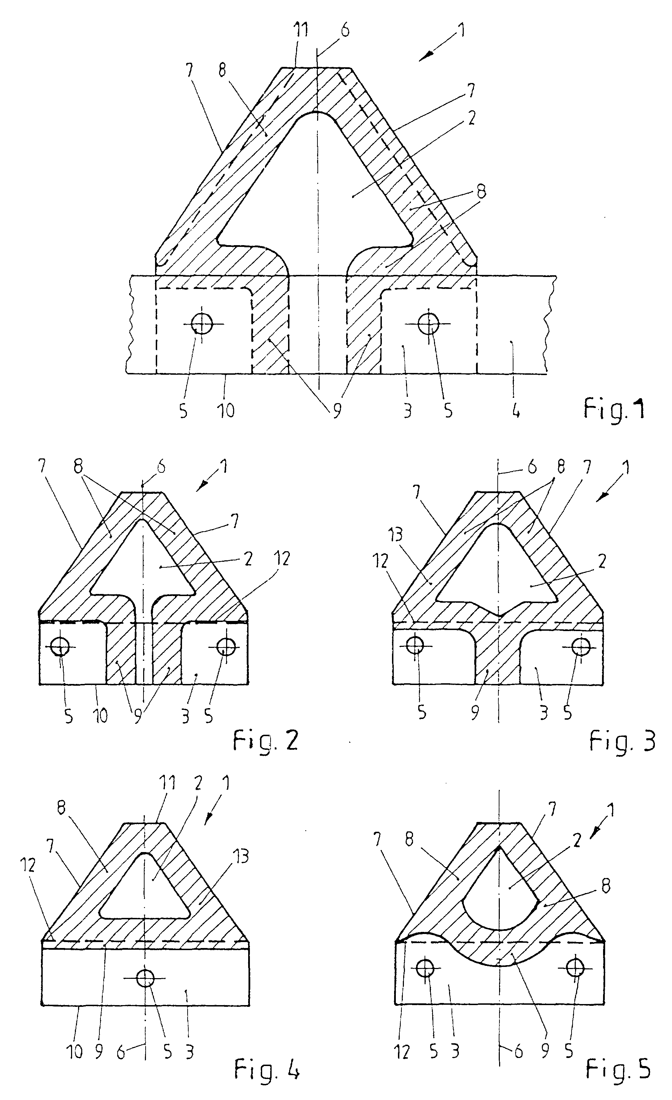

Die in Fig. 1 dargestellte Klinge 1 besteht aus einem flachen plattenförmigen Körper aus Stahl, der bereichsweise auch abgesenkt sein kann o. dgl.. Da es auf diese Einzelheiten im vorliegenden Zusammenhang nicht ankommt, ist lediglich der wesentliche Umriß der Klinge angedeutet. Die Klinge 1 weist einen Schneidenbereich 2 und einen Befestigungsbereich 3 auf. Die Klinge 1 ist mit ihrem Befestigungsbereich 3 an einem Messerrücken 4 angebracht. Hierzu weist die Klinge 1 im Befestigungsbereich 3 zwei Durchbrechungen 5 auf, die mit entsprechenden Durchbrechungen im Messerrücken 4 fluchten und durch hindurch ein Befestigungsmittel, insbesondere ein Niet oder eine Schraube, geführt ist. Als Befestigungsbereich 3 wird der Bereich der Klinge 1 verstanden, dessen Umriß sich mit dem Umriß des Messerrückens 4 deckt bzw. diesen überlappt. Der frei auskragende Teil der Klinge 1 dagegen stellt den Schneidenbereich 2 dar. Der Schneidenbereich weist etwa dreieckförmige Gestalt auf, während der Befestigungsbereich 3 rechteckig ausgebildet ist.

Im Schneidenbereich 2 sind hier in symmetrischer Anordnung zu einer Längsmittelebene 6 zwei Schneiden 7 vorgesehen, deren Schneidwarten durch gestrichelte Linien verdeutlicht sind. Im Schneidenbereich 2 ist eine Härtezone 8 vorgesehen, deren Erstreckung, Ausbildung und Anordnung durch ein schraffiertes Feld hervorgehoben ist. Diese erste Härtezone 8 erstreckt sich in weiten Bereichen entlang des Randes des Schneidenbereiches und damit auch entlang der Schneiden 7. Die Härtezone 8 besitzt eine gewisse Tiefe und ist im unteren Bereich des Schneidenbereichs 2 nach innen geführt. Diese Härtezone 8 setzt sich in einer weiteren Härtezone 9 fort, die im Befestigungsbereich 3 der Klinge 1 vorgesehen ist. Wie ersichtlich ist die Härtezone 9 in zwei Teilbereichen symmetrisch zu der Längsmittelebene 6 und mit Abstand zu dieser vorgesehen, wobei sich die Teilbereiche der Härtezone 9 bis zum Rand 10 der Klinge 1 erstrecken. Die Härtezone 9 verläuft auch mit Abstand bzw. unter Aussparung der Durchbrechungen 5. Die Härtezonen 8 und 9 im Schneidenbereich 2 und im Befestigungsbereich 3 besitzen, wie dargestellt, gleiche oder etwa gleiche Breite, gehen absatzlos ineinander über und gehen vom rückwärtigen Rand 10 der Klinge 1 bis zur Klingenspitze 11 durch. Die beiden Härtezonen 8 und 9 ergänzen einander und bilden insgesamt ein auskragendes versteifendes Gerüst für das Material der Klinge 1. Man erkennt, daß die Klinge 1 mit Hilfe der durch die Durchbrechungen 5 reichenden Befestigungsmittel so am Messerrücken 4 eingespannt wird, daß die Härtezone 9 eingeschlossen und damit die Härtezone 8 im Klingenbereich 2 gespannt gehalten wird. Aus Fig. 1 ist auch erkennbar, daß die Schneidwarten im Schneidenbereich 2 seitlich auslaufen und sich nicht bis in den Befestigungsbereich 3 erstrecken. Gleichwohl erstreckt sich der gehärtete Übergangsstreifen der Härtezonen 8 und 9 am Übergang zwischen Schneidenbereich 2 und Befestigungsbereich 3 in beiden Bereichen, wobei dann die Härtezone 9 bis zum Rand 10 der Klinge 1 durchgehend ausläuft.

In den folgenden Ausführungsformen der Klingen 1 ist der Messerrücken 4 weggelassen, so daß sich jeweils eine volle Ansicht auf die Klinge 1 ergibt. Der Übergang zwischen dem Schneidenbereich 2 zu dem Befestigungsbereich 3 ist jedoch durch eine gestrichelte Linie 12 angedeutet. Diese entspricht der Lage der Kante des Messerrückens 4 in der an diesen angesetzten Stellung. Die Ausführungsform gemäß Fig. 2 ist an sich ähnlich wie die Ausführungsform in Fig. 1 aufgebaut. Im Unterschied dazu sind lediglich die beiden Teilbereiche der Härtezone 9 näher aneinander herangerückt. Sie befinden sich damit auch näher an der Längsmittelebene 6, jedoch ohne ineinander überzugehen. Die Verbindungsbereiche der Härtezonen 8 und 9 im Schneidenbereich 2 sind hier im wesentlichen im Schneidenbereich untergebracht und schwenken erst im mittleren Bereich der Klinge in die Härtezonen 9 ein.

Bei der Ausführungsform gemäß Fig. 3 sind die beiden Teilbereiche der Härtezone 9 noch näher aneinander herangerückt, so daß sich hier eine durchgehende Härtezone 9 ergibt, die aber ebenfalls symmetrisch zu der Längsmittelebene 6 und unter Aussparung der Durchbrechungen 5 angeordnet ist. Die Verbindungsbereiche zwischen den Härtezonen 8 und 9 erstrecken sich teilweise im Schneidenbereich 2 und teilweise im Befestigungsbereich 3. Im Schneidenbereich 2 wird ein in sich geschlossener Dreieckszug 13 geschaffen, also ein ringförmig verlaufender Streifen in Dreiecksgestalt, der sich im wesentlichen über den Schneidenbereich 2 erstreckt und der von der Härtezone 9 gleichsam stielartig getragen bzw. auskragend gelagert ist, wenn die Klinge 1 mit dem Messerrücken 4 verbunden ist.

Dieser Dreieckszug 13 ist auch bei der Ausführungsform der Fig. 4 erkennbar. Die dort gezeigte Klinge 1 weist nur eine Durchbrechung 5 auf, die in der Längsmittelebene 6 angeordnet ist. Die erste Härtezone 8 erstreckt sich im wesentlichen in Form des Dreieckszuges 13 im Schneidenbereich 2. Die im Befestigungsbereich 3 vorgesehene Härtezone 9 verläuft hier quer zur Längsmittelebene 6 und ergänzt insoweit den Dreieckszug 13. Die Härtezone 9 läuft also hier nicht bis zum Rand 10 der Klinge 1 durch.

Bei der Ausführungsform gemäß Fig. 5 endet die Härtezone 9 des Befestigungsbereiches 3 nicht in einer sich senkrecht zu der Längsmittelebene 6 erstreckenden Linie, sondern es ist hier eine geschweifte Ausbildung vorgesehen, die so gestaltet ist, daß sich die Härtezone 9 einerseits in den Befestigungsbereich 3 hineinerstreckt, andererseits um die Durchbrechungen 5 herum jedoch ein Abstand geschaffen wird, in welchem das Material der Klinge 1 von dem Härtevorgang nicht erfaßt wird. Bei all diesen Ausführungsformen ist auch erkennbar, daß sich die Härtezone 8 nur über einen Teil des Schneidenbereiches 2 erstreckt. Die Mitte des Schneidenbereiches bleibt von einer Härtung unbeeinflußt. Aber auch die Härtezone 9 im Befestigungsbereich 3 erstreckt sich nur partiell über diesen Befestigungsbereich 3, wobei insbesondere die Durchbrechungen 5 ausgespart sind.

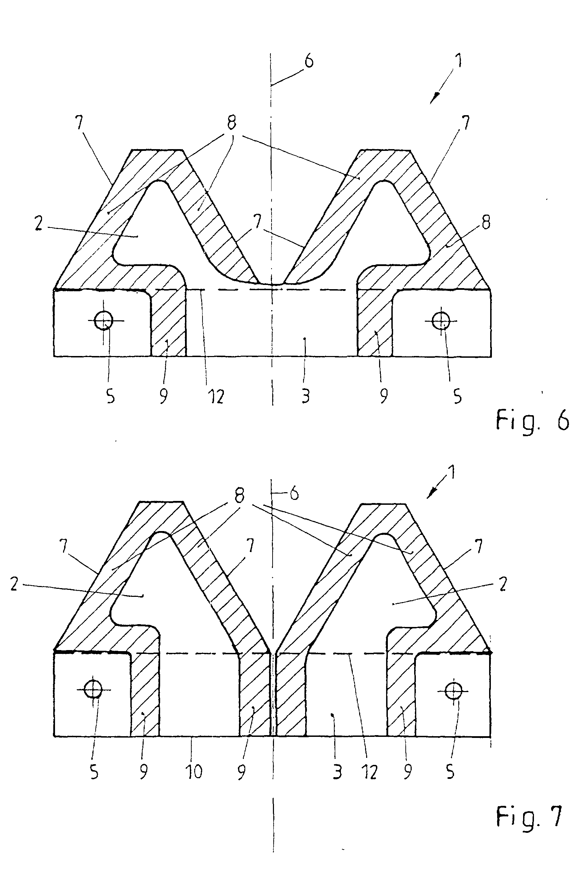

Die Ausführungsbeispiele der Fig. 6 und 7 zeigen Doppelklingen, jeweils aus einem einzigen zusammenhängenden Materialstück. Im Klingenbereich 2 sind hier vier Schneiden 7 gebildet. Der Übergang zwischen dem Schneidenbereich 2 und dem Befestigungsbereich 3 ist auch hier durch die gestrichelte Linie 12 verdeutlicht. Beide Härtezonen 8 und 9 sind symmetrisch zu der Längsmittelebene 6 verteilt angeordnet und erstrecken sich in einem durchgehenden Streifen, der lediglich im Bereich der Längsmittelebene 6 im Schneidenbereich unterbrochen ist. Bei der Ausführungsform gemäß Fig. 7 sind die Härtezonen 8 im Bereich der Längsmittelebene 6 nach unten bis zum rückwärtigen Rand 10 des Befestigungsbereiches 3 durchgezogen, so daß die Härtezone 9 im Befestigungsbereich 3 insgesamt aus vier Teilbereichen oder Teilflächen besteht. Das gleiche gilt sinngemäß auch für andere Mehrfachklingen, beispielsweise für eine Dreifachklinge (nicht dargestellt).

### BEZUGSZEICHENLISTE

- 1 -: Klinge
- 2 -: Schneidenbereich
- 3 -: Befestigungsbereich
- 4 -: Messerrücken
- 5 -: Durchbrechung
- 6 -: Längsmittelebene
- 7 -: Schneide
- 8 -: Härtezone
- 9 -: Härtezone
- 10 -: Rand
- 11 -: Klingenspitze
- 12 -: gestrichelte Linie
- 13 -: Dreieckszug

## Patentansprüche

1. Klinge (1) für Mähmesser, mit einem vorderen Schneidenbereich (2), der mindestens eine Schneide (7) mit einer sich über die Schneide erstreckenden Härtezone (8) aufweist, und mit einem rückwärtigen Befestigungsbereich (3), der zur Befestigung der Klinge (1) an einem Messerrücken (4) dient und mindestens eine Durchbrechung (5) für den Einsatz eines Befestigungsmittels aufweist, wobei im Befestigungsbereich (3) der Klinge (1) eine weitere Härtezone (9) vorgesehen ist, die sich nur über einen Teil des Befestigungsbereiches (3) erstreckt, **dadurch gekennzeichnet, daß** die Härtezone (9) im Befestigungsbereich (3) und die Härtezone (8) im Schneidenbereich (2) aneinander anschließend angeordnet sind.

2. Klinge nach Anspruch 1, **dadurch gekennzeichnet, daß** die Härtezone (9) im Befestigungsbereich (3) mit Abstand zu der oder den Durchbrechungen (5) angeordnet ist.

3. Klinge nach Anspruch 1 und 2, **dadurch gekennzeichnet, daß** beide Härtezonen (8, 9) streifenförmig und ineinander übergehend ausgebildet sind.

4. Klinge nach einem der Ansprüche 1 bis 4, **dadurch gekennzeichnet, daß** die Klinge (1) im Schneidenbereich (2) dreieckige Gestalt und im Befestigungsbereich (3) rechteckige Gestalt aufweist, und daß die Härtezonen (8, 9) symmetrisch zu einer Längsmittelebene (6) der Klinge (1) verteilt angeordnet sind.

5. Klinge nach Anspruch 1, **dadurch gekennzeichnet, daß** beide Härtezonen (8, 9) übereinstimmende Härte aufweisen.

6. Klinge nach Anspruch 1, **dadurch gekennzeichnet, daß** die weitere Härtezone (9) im Befestigungsbereich (3) eine gegenüber der Härtezone (8) im Schneidenbereich (2) durch einen Anlaßvorgang reduzierte Härte aufweist.

7. Klinge nach einem der Ansprüche 1 bis 6, **dadurch gekennzeichnet, daß** die Härtezone (9) im Befestigungsbereich (3) in Richtung der Längsmittelebene (6) der Klinge (1) ausgerichtet angeordnet ist.

8. Klinge nach Anspruch 7, **dadurch gekennzeichnet, daß** die Härtezone (9) im Befestigungsbereich (3) in zwei nicht miteinander verbundene Teilbereiche unterteilt ist, von denen jeder Teilbereich mit einer Härtezone (8) im Schneidenbereich (2) in Verbindung steht.

9. Klinge nach einem der Ansprüche bis 6, **dadurch gekennzeichnet, daß** die Härtezone (9) im Befestigungsbereich (3) in Richtung quer zu der Längsmittelebene (6) der Klinge (1) ausgerichtet angeordnet ist und gemeinsam mit der Härtezone (8) im Schneidenbereich (2) einen geschlossenen Dreieckszug (13) bildet.

10. Verfahren zur Herstellung einer Klinge für Mähmesser nach einem der Ansprüche 1 bis 9, indem eine Rohklinge gestanzt, diese im Schneidenbereich (2) erwärmt und abgeschreckt und an der Rohklinge die Schneide (7) durch Anschleifen erzeugt wird, **dadurch gekennzeichnet, daß** die Rohklinge sowohl im Schneidenbereich (2) als auch im Befestigungsbereich (3) in einem Arbeitsgang streifenförmig durchgehend induktiv erwärmt wird, und daß die gesamte Rohklinge vor dem Anschleifen der Schneide (7) angelassen wird.

11. Verfahren nach Anspruch 10, **dadurch gekennzeichnet, daß** die Härtezonen (8, 9) der Rohklinge im Scheidenbereich (2) und im Befestigungsbereich (3) in einem ersten Anlaßvorgang auf eine Härte von etwa 50 bis 60 HRc eingestellt wird, und daß die Härtezone (9) im Befestigungsbereich (3) der Rohklinge in einem zweiten Anlaßvorgang auf eine Härte von etwa 30 bis 40 HRc eingestellt wird.

## Claims

1. A blade (1) for mowing knifes, including a front cutting edge portion (2) having at least one cutting edge (7) having a hardened zone (8) extending over the cutting edge, and including a rear attachment portion (3) serving for attachment of the blade (1 ) at a knife back (4) and at least one opening (5) for use of an attachment means, a further hardened zone (9) being provided in the attachment portion (3) of the blade (1), the further hardened zone (9) only extending over a part of the attachment portion (3), **characterised in that** the hardened zone (9) in the attachment portion (3) and the hardened zone (8) in the cutting edge portion (2) are arranged to be interconnected.

2. The blade of claim 1, **characterised in that** the hardened zone (9) in the attachment portion (3) is arranged to be spaced apart from the opening (5) or the openings (5).

3. The blade of claim 1 or 2, **characterised in that** the two hardened zones (8, 9) are designed to be strip-like and to blend into each other.

4. The blade of one of claims 1 to 4, **characterised in that** the blade (1) in the cutting edge portion (2) has a triangular shape and in the attachment portion (3) has a rectangular shape, and that the hardened zones (8, 9) are arranged to be symmetrical with respect to a longitudinal centre plane (6) of the blade (1) in a spaced apart manner.

5. The blade of claim 1, **characterised in that** the two hardened zones (8, 9) have the same hardness.

6. The blade of claim 1, **characterised in that** the further hardened zone (9) in the attachment portion (3) has a hardness being reduced by a tempering process compared to the hardened zone (8) in the cutting edge portion (2).

7. The blade of one of claims 1 to 6, **characterised in that** the hardened zone (9) in the attachment portion (3) is arranged to be aligned in the direction of the longitudinal centre plane (6) of the blade (1).

8. The blade of claim 7, **characterised in that** the hardened zone (9) in the attachment portion (3) is divided into two partial portions not being interconnected, each partial portion being connected with a hardened zone (8) in the cutting edge portion (2).

9. The blade of one of claims 1 to 6, **characterised in that** the hardened zone (9) in the cutting edge portion (3) is arranged to be aligned in a direction transverse with respect to the longitudinal centre plane (6) of the blade (1), and it together with the hardened zone (8) in the cutting edge portion (2) forms a closed triangular line (13).

10. A method of producing a blade for mowing knifes of one of claims 1 to 9, in which a raw blade is stamped, the raw blade in the cutting edge portion (2) is heated and quenched and the cutting edge (7) is produced at the raw blade by grinding, **characterised in that** the raw blade in the cutting edge portion (2) as well as in the attachment portion (3) is inductively heated by one process step in a strip-like, continuous way, and that the entire raw blade is tempered before grinding the cutting edge (7).

11. The method of claim 10, **characterised in that** the hardened zones (8, 9) of the raw blade in the cutting edge portion (2) and in the attachment portion (3) are adjusted to reach a hardness of approximately 50 to 60 HRc in a first quenching process, and that the hardened zone (9) in the attachment portion (3) of the raw blade is adjusted to reach a hardness of approximately 30 to 40 HRc in a second quenching process.

## Revendications

1. Lame (1) pour faucheuse avec une zone de coupe (2) antérieure qui présente au moins un tranchant (7) avec une zone de dureté (8) s'étendant au-dessus du tranchant et avec une zone de fixation (3) dirigée vers l'arrière qui sert pour la fixation de la lame (1) à un dos de lame (4) et présente au moins une découpure (5) pour le montage d'un moyen de fixation, une autre zone de dureté (9), qui ne s'étend que sur une partie de la zone de fixation (3), étant prévue dans la zone de fixation (3) de la lame (1),
**caractérisée en ce que** la zone de dureté (9) dans la zone de fixation (3) et la zone de dureté (8) dans la zone de coupe (2) sont disposées raccordées l'une à l'autre.

2. Lame selon la revendication 1,
**caractérisée en ce que** la zone de dureté (9) dans la zone de fixation (3) est disposée écartée de la ou des découpures (5).

3. Lame selon la revendication 1 ou 2,
**caractérisée en ce que** les deux zones de dureté (8, 9) sont conformées en forme de bandes et se convertissant l'une en l'autre.

4. Lame selon l'une des revendications 1 à 4,
**caractérisée en ce que** la lame (1) présente une forme triangulaire dans la zone de coupe (2) et une forme rectangulaire dans la zone de fixation (3) et que les zones de dureté (8, 9) sont disposées réparties symétriquement par rapport à un plan longitudinal médian (6) de la lame (1).

5. Lame selon la revendication 1,
**caractérisée en ce que** les deux zones de dureté (8, 9) présentent une dureté coïncidente.

6. Lame selon la revendication 1,
**caractérisée en ce que** l'autre zone dureté (9) dans la zone de fixation (3) présente une dureté réduite par une opération de revenu par rapport à la zone de dureté (8) dans la zone de coupe (2).

7. Lame selon l'une des revendications 1 à 6,
**caractérisée en ce que** la zone de dureté (9) dans la zone de fixation (3) est disposée orientée dans la direction du plan longitudinal médian (6) de la lame (1).

8. Lame selon la revendication 7,
**caractérisée en ce que** la zone de dureté (9) dans la zone de fixation (3) est divisée en deux zones partielles non reliées entre elles parmi lesquelles chaque zone partielle est en liaison avec une zone de dureté (8) dans la zone de coupe (2).

9. Lame selon l'une des revendications 1 à 6,
**caractérisée en ce que** la zone de dureté (9) dans la zone de fixation (3) est disposée orientée en direction transversalement au plan longitudinal médian (6) de la lame (1) et forme en commun avec la zone de dureté (8) dans la zone de coupe (2) un passage triangulaire (13) fermé.

10. Procédé pour la fabrication d'une lame pour faucheuse selon l'une des revendications 1 à 9, dans lequel une lame brute est découpée, celle-ci est chauffée dans la zone de coupe (2) et trempée et le tranchant (7) est engendré dans la lame brute par affûtage,
**caractérisé en ce que** la lame brute est chauffée inductivement sous forme de bande en continu en une passe de travail aussi bien dans la zone de coupe (2) que dans la zone de fixation (3) et que l'ensemble de la lame brute est soumis à un revenu avant l'affûtage du tranchant (7).

11. Procédé selon la revendication 10,
**caractérisé en ce que** les zones de dureté (8, 9) de la lame brute sont amenées, dans une première opération de revenu, à une dureté d'environ 50 à 60 HRc dans la zone de coupe (2) et dans la zone de fixation (3) et que la zone de dureté (9) dans la zone de fixation (3) de la lame brute est amenée à une dureté d'environ 30 à 40 HRc dans une seconde opération de revenu.
